# EUROPEAN PATENT APPLICATION

(11) **EP 3 023 866 A1**
(43) Date of publication of application: **25.05.2016**
(21) Application number: 14825974.0
(22) Date of filing: 17.07.2014
(51) Int. Cl.: G06F 3/02

(54) **DATA INPUT DEVICE**

(30) Priority: 19.07.2013 KR 20130085241
(71) Applicant: Lee, Ju-Hyup, Suwon-si, Gyeonggi-do 442-828 (KR)
(72) Inventor: Lee, Ju-Hyup, Suwon-si, Gyeonggi-do 442-828 (KR)
(74) Representative: Cabinet Chaillot
(86) International application number: PCT/KR2014/006508
(87) International publication number: WO 2015/009081

(57) **Abstract**

The invention provides a data input device which includes an input unit including at least one selection segment that runs an inputs in response to selection by a finger and a sensing unit that has at least one sensing means that detects the selection in response to the selection for predetermined position of the input unit and generates an input signal, and which is provided to perform the input of the data assigned to an input value set in the input signal.

According to the invention, there is an advantage of being able to easily and rapidly perform the input of various data by a structure of the selection segment in which data is inputted by means of intuitive selecting action of the finger respect to a reference position, one side or the other side of the reference position, and which is provided to respond to the selection of one finger.

## Description

### Technical Field

The present invention relates to a data input device. Specifically, the invention relates to a device for inputting data into an electronic device, wherein a variety of data such as characters, numbers, symbols, executing commands are easily and quickly inputted through intuitive selection performed with one finger in an input unit provided to respond to the one finger.

### Background Art

Recently, a data input device that is configured in or applied to an electronic device for providing or receiving data tends to become smaller in size and varied in type. However, a keyboard for performing various inputs in the data input device has a number of difficulties in becoming small in size or being configured in an easily-carried manner, in comparison to conventional keyboards.

For one example to solve the difficulties, Korean Patent Registration No. 100466874 (registered on January 08, 2005), entitled "Apparatus and Method for Inputting in Personal Digital Assistance" is publicized.

The input apparatus for a portable terminal of the present invention is configured to include a frame on a panel which has one or more sliding through holes, a sliding panel which is inserted into the sliding through hole and slidingly displaced inside in left-up, left-down, right-up, and right-down directions, a support protrusion which protrudes from the center of the bottom surface of the sliding panel, a plurality of input members which are arranged on edges of the bottom surface of the sliding panel in a predetermined distance, and one or more elastic members which are disposed one the bottom of the sliding panel in such a manner as to be adjacent to the input members, wherein the input apparatus is positioned on a touch screen of a mobile phone, and the sliding panel is displaced in the sliding through hole so that an input key on the touch screen and the input member corresponding thereto are matched to each other, and thus predetermined data are inputted.

Specifically, the input apparatus is characterized in that the frames are placed on multiple entry points through a plurality of input buttons or a touch screen, and then the sliding panel is inserted into and slidingly displaced in the sliding through hole so that an input button desired to be pushed or an entry point is matched to any one of the input members, a key value assigned to the entry point is inputted.

Such an input apparatus is configured in such a manner that a plurality of input steps are performed using the sliding panel on the touch screen, and thus a user has a difficulty in inputting data intuitively without taking a look at the input apparatus continuously.

In addition, the input apparatus has disadvantages that data may be inputted incorrectly and stress is accumulated to a finger, because the user continuously applies force to his or her finger consciously or unconsciously in a plurality of the input steps.

For another example, Korean Patent Registration No. 101008581 (registered on January 10, 2011), entitled "Data Input Device" is publicized.

The data input device of the present invention includes an input unit, a plurality of sensing units which have a plurality of direction indicating positions, input means, and sensors in an input area that is radially formed from the center of the input unit in a predetermined size, and a control unit.

Specifically, the input unit includes an input area in which a first direction input is performed through pushing any one of a plurality of first direction indicating positions radially arranged from a reference position, a second direction input is performed through applying force to any one of a plurality of second direction indicating positions radially arranged from the reference position, a third direction input is performed through pushing any one of a plurality of third direction indicating positions radially arranged from the reference position in a state in which a finger comes into contact with the input unit, and a fourth direction input is performed through leaning a finger toward any one of a plurality of fourth direction indicating positions radially arranged from the reference position in a state in which the finger comes into contact with the input unit, and a touch sensor unit which senses the contact and movement of a finger in the input area.

Such a data input device has disadvantages that, in a case in which two or more of the first to fourth direction inputs are performed together, the inputs cause a user's finger to have increased fatigued and data may be incorrectly inputted.

In order to solve the above problems, an invention such as a following data input device is desired, wherein the input unit is provided to a simple single type structure so as to correspond in a selection range using one finger; an indication position to run an input by the selection in the input unit is consisted to be positioned each other in one side and the other side of the selection segment which are spaced from each other in a predetermined distance on one axis within the selection range; the selection for one or more among the one side and the another side is performed by an intuitive selecting action of one finger by the configuration of the input unit; on the basis of a single selecting action using one finger for a selection position performing the selection in the input unit, three data inputs different from each other are respectively performed by a selection using one finger in such a manner that the selection is performed once each for two indication positions corresponding the selection position in the one side and another side and middle position of the two indication positions; and an input of a various data can be performed easily and quickly by the selection for the selection position in the selection range.

### Disclosure

### Technical Problem

The present invention is applied to solve the above problems of the prior arts, an objective of the present invention is to provide a data input device, wherein the input unit that runs an input is provided to a simple single type structure so as to correspond in a selection range using one finger; an indication position to run an input by the selection in the input unit is consisted to be positioned each other in one side and the other side of the selection segment which are spaced from each other in a predetermined distance on one axis of one direction within the selection range; the selection for one or more among the one side and the another side is performed by an intuitive selecting action of one finger by the configuration of the input unit; on the basis of a single selecting action using one finger for a selection position performing the selection in the input unit, three data inputs different from each other are respectively performed by a selection using one finger in such a manner that the selection is performed once each for two indication positions corresponding the selection position in the one side and another side and middle position of the two indication positions; and an input of a various data can be performed easily and quickly by the selection for the selection position in the selection range.

### Technical Solution

To achieve the objective of the present invention, according to a first aspect of the present invention, there is provided a data input device which includes at least one input unit and a sensing unit that has at least one sensing means that detects selections for a predetermined position of the input unit and generates an input signal, and provided to perform an input of data assigned to input values set in the input signal, characterized in that the input unit comprises at least one selection segment that runs inputs in response to selection by a finger; the selection segment is provided to a size having a predetermined width and length within a range in contact with the fingerprint region on the distal end of one thumb; two indication positions are comprised in the selection segment, wherein the indication positions consist of one indication position in the one side and the other indication position in the other side of the selection segment that are positioned as to be spaced from each other in a predetermined distance on one axis of one direction within the selection segment; when a reference position located between the one side and the other side in the selection segment is selected by a single selecting action using one finger, one indication position in the one side and the other indication position in the other side corresponding to selection positions in the one side and the other side are selected together in response to the selecting action, two different input signals generated in the selection position of the sensing unit that has sensed the selection are set to be run as one basic input; when any one of the one side and the other side in the selection segment is selected by a single selecting action using one finger, one indication position in the one side corresponding to selection position in the one side or the other indication position in the other side corresponding to selection position in the one side and the other side is individually selected in response to the selecting action, one input signal generated in the selection position of the sensing unit that has sensed the selection is set to be run as one side input; and one input value is set in the side input, and a new one input value different from the input value of the side input is set in the basic input.

In addition, it is characterized in that in the selection segment, the two different input signals consist of one left indication position in the left and one right indication position in the right of the selection segment which are positioned on one axis in the horizontal direction within the selection segment in such a manner as to be spaced from each other in a predetermined distance, and the left and right indication positions are positioned within an area corresponding to the fingerprint of the distal end of one thumb that is placed on the center of the selection segment.

Furthermore, it is characterized in that at least one projection, one protruding portion, or one line is formed around the reference position in the selection segment.

Besides, it is characterized in that a concave portion is formed around the reference position in the selection segment.

In addition, it is characterized in that the input unit is provided to a plurality of input units on a predetermined base, and the input units are arranged in such a manner as to be spaced from each other in at least one direction in a predetermined distance on the base.

Furthermore, it is characterized in that the input unit consists of a first input unit and a second input unit which are arranged in such a manner as to be spaced from each other in a vertical direction in a predetermined distance on a predetermined base; on the basis of one reference line horizontally passing a predetermined position between the first input unit and the second input unit, the left indication position of the first input unit positioned to the front of the reference line and the left indication position of the second input unit positioned to the rear of the reference line, or the right indication position of the first input unit positioned to the front of the reference line and the right indication position of the second input unit positioned to the rear of the reference line are selected together by a single selecting action using one finger, and thus a predetermined input is performed; and a new one input value different from each input value set in the left and right indication positions is set in the input.

Besides, it is characterized in that the input unit consists of a first input unit and a second input unit which are arranged in such a manner as to be spaced from each other in a horizontal direction in a predetermined distance on a predetermined base; on the basis of one reference line vertically passing a predetermined position between the first input unit and the second input unit, the right indication position of the first input unit positioned to the left of the reference line and the left indication position of the second input unit positioned to the right of the reference line are selected together by a single selecting action using one finger, and thus a predetermined input is performed; and a new one input value different from each input value set in the right and left indication positions is set in the input.

In addition, it is characterized in that the basic input or the side input is performed in a multistage by two or more times successive selection for one among the reference position, the one indication position in the one side, and the other indication position in the other side; and a new one input value different from an input value set in the basic input or side input before performing the multistage is set in the basic input or side input performed in the multistage.

Furthermore, it is characterized in that the selection segment consists of a first selection segment and a second selection segment, and the first and second selection segments are positioned in such a manner as to be spaced from each other in a predetermined distance in a vertical direction of the input unit.

Besides, it is characterized in that each of the first and second selection segments is provided to a size having a predetermined width and length within a range in contact with the fingerprint region on the distal end of one thumb; the left and right indication positions of the respective selection segment are positioned as to be spaced from each other in a predetermined distance on one horizontal axis of one direction, and are positioned within an area corresponding to the fingerprint of the distal end of one thumb that is placed on the center of the respective selection segment; and one or more inputs of the basic input and the side input running in the selection segments are performed by one finger placed on the center of the input unit.

In addition, it is characterized in that the input unit is provided to a plurality of input units on a predetermined base, and the input units are arranged in such a manner as to be spaced from each other in at least one direction in a predetermined distance on the base.

Furthermore, it is characterized in that the input unit consists of a first input unit and a second input unit which are arranged in such a manner as to be spaced from each other in a horizontal direction in a predetermined distance on a predetermined base; on the basis of one reference line vertically passing a predetermined position between the first input unit and the second input unit, the right indication position of first selection segment of the first input unit positioned to the left of the reference line and the left indication position of first selection segment of the second input unit positioned to the right of the reference line, or the right indication position of second selection segment of the first input unit positioned to the left of the reference line and the left indication position of second selection segment of the second input unit positioned to the right of the reference line are selected together by a single selecting action using one finger, and thus a predetermined input is performed; and a new one input value different from each input value set in the right and left indication positions is set in the input.

Besides, it is characterized in that the left indication position of the first selection segment and the left indication position of the second selection segment, or the right indication position of the first selection segment and the right indication position of the second selection segment are selected together by a single selecting action using one finger, and thus a predetermined input is performed; and a new one input value different from each input value set in the left and right indication positions is set in the input.

In addition, it is characterized in that the first and second selection segments are provided to a predetermined size within contact with the fingerprint region on the distal end of one thumb; the left indication position and the right indication position of the first and second selection segments are positioned as to be spaced from each other in a predetermined distance on the axis within the respective selection segment, and are positioned within an area corresponding to the fingerprint of the distal end of one thumb that is placed on the center of the first and second selection segments; and one or more inputs of the basic input and the side input running in the selection segments are performed by one finger placed on the center of the input unit.

According to a second aspect of the present invention, there is provided a data input device which includes an input unit and a sensing unit that has at least one sensing means that detects selections for a predetermined position of the input unit and generates an input signal, and provided to perform an input of data assigned to input values set in the input signal, characterized in that the input unit comprises a selection segment that runs inputs in response to selecting from the outside of the input unit; the selection segment is provided to a predetermined size within a range of the input unit, and is provided including at least two indication positions that are spaced in a predetermined distance from each other; when a reference position located between the one side and the other side of the selection segment is selected, two indication positions that are spaced in a predetermined distance to one side and the other side of the reference position on one axis of one direction among the indication positions, two different input signals generated in the selection position of the sensing unit that has sensed the selection are set to be run as one basic input; and when any one of the one side and the other side of the selection segment is selected, one indication position in the one side or the other indication position in the other side among the two indication positions is individually selected, one input signal generated in the selection position of the sensing unit that has sensed the selection is set to be run as one side input.

According to a third aspect of the present invention, there is provided a data input device which includes at least one input unit and a sensing unit that has at least one sensing means that detects selections for a predetermined position of the input unit and generates an input signal, and provided to perform an input of data assigned to input values set in the input signal, characterized in that the input unit comprises at least one selection segment that runs inputs in response to selection by a finger; the selection segment is provided to a size having a predetermined width and length within a range in contact with the fingerprint region on the distal end of one thumb; two indication positions are comprised in the selection segment, wherein the indication positions consist of one indication position in the one side and the other indication position in the other side of the selection segment that are positioned as to be spaced from each other in a predetermined distance on one axis of one direction within the selection segment; one indication position in the one side and the other indication position in the other side are positioned within an area corresponding to the fingerprint of the distal end of one thumb that is placed on the center of the selection segment; when a reference position located between the one side and the other side in the selection segment is selected by a single selecting action using one finger, one indication position in the one side and the other indication position in the other side corresponding to selection positions in the one side and the other side are selected together in response to the selecting action, two different input signals generated in the selection position of the sensing unit that has sensed the selection are set to be run as one basic input; when any one of the one side and the other side in the selection segment is selected by a single selecting action using one finger, one indication position in the one side corresponding to selection position in the one side or the other indication position in the other side corresponding to selection position in the one side and the other side is individually selected in response to the selecting action, one input signal generated in the selection position of the sensing unit that has sensed the selection is set to be run as one side input; and one input value is set in the side input, and a new one input value different from the input value of the side input is set in the basic input.

In addition, it is characterized in that the sensing unit is provided to at least one location among a surface of the input unit, a location protruding a predetermined height from the surface of the input unit, and a location concaving a predetermined depth from the surface of the input unit.

### Advantageous Effects

According to the present invention, the selection segment is provided to a simple single type structure so as to correspond in a selection range using one finger, an indication position to run an input by the selection is consisted to be positioned each other in one side and the other side of the selection segment which are spaced from each other in a predetermined distance on one axis within the selection range. That is, according to the present invention, the selection for one or more among the one side and the other side of the selection segment within the selection range is performed by an intuitive selecting action of one finger by the configuration of the selection segment; characterized in that on the basis of a single selecting action using one finger for a selection position performing the selection in the selection segment, three data inputs different from each other are respectively performed by a selection using one finger in such a manner that the selection is performed once each for two indication positions (one indication position of the one side and one indication position of the other side) corresponding the selection position in the one side and another side and middle position of the two indication positions. Accordingly, the present invention has an advantage that allows an input of a various data can be performed easily and quickly by the selection for the selection position within the selection range (one indication position of the one side, the middle position, and one indication position of the other side).

In addition, the present invention has a structure that allows the selection position is naturally recognized through the finger placed on the selection segment, even in a state in which one finger is placed in the center of the selection segment and the selection position is out of the range of a user's sight. That is, the present invention has advantages that the selection segment allows an inputs to be naturally performed in response to the selection performed by a fine intuitive movements of the finger according to the recognition, and allows a fatigue of the finger to be greatly reduced or an occurrence of the fatigue to be suppressed.

Furthermore, according to the present invention, inputting may be easily and quickly performed even in a state in which a user carries, grips, or wears a device of the present invention, walks, or in a state in which a user in the middle of shifting or moving. That is, the present invention has an advantage that the user can performs a selection for the selection position in the selection segment by a familiar and an intuitive selecting action of one finger without an additional learning and naturally.

Besides, the present invention may be easily applied to an electronic devices of various types or configured as a mini slim accessories of various types, thereby has an advantage that usability, convenience, and portability can be further improved in respond to a various tastes of users.

### Description of Drawings

FIG. 1 illustrates a schematic configuration of a data input device according to one embodiment of the present invention.
FIG. 2 illustrates an example of inputs performed using a data input device according to one embodiment of the present invention, wherein the inputs are performed by a selecting action of one thumb in a selection segment of the data input device.
FIG. 3 illustrates a schematic configuration of an input unit according to one embodiment of the present invention.
FIG. 4 illustrates examples of inputs performed in a selection segment according to one embodiment of the present invention shown in FIG. 3.
FIG. 5 illustrates a schematic configuration of an input unit according to one embodiment which is different from the embodiment shown in FIG. 3 among embodiments of a data input device in the present invention.
FIG. 6 illustrates a schematic configuration of an input unit according to one embodiment which is different from the embodiment shown in FIG. 3 or 5 among embodiments of a data input device in the present invention.
FIG. 7 illustrates examples of inputs performed in a selection segment according to one embodiment of the present invention shown in FIG. 6.
FIG. 8 illustrates a schematic configuration of an input unit according to one embodiment which is different from the embodiment shown in FIG. 6 among embodiments of a data input device in the present invention.
FIG. 9 illustrates examples of input values of various inputs performed in a selection segment according to one embodiment of the present invention shown in FIGS. 3 and 5.
FIG. 10 illustrates examples of input values of various inputs performed in a multistage manner in a selection segment according to one embodiment of the present invention shown in FIGS. 3 and 5.
FIG. 11 illustrates examples of various configurations of data assigned to input values that are set to inputs performed in a selection segment according to one embodiment of the present invention shown in FIGS. 3 and 5.
FIG. 12 illustrates examples of input values of various inputs performed in a selection segment according to one embodiment of the present invention shown in FIGS. 6 and 8.
FIG. 13 illustrates examples of input values of various inputs performed in a multistage manner in a selection segment according to one embodiment of the present invention shown in FIGS. 6 and 8.
FIG. 14 illustrates examples of various configurations of data assigned to input values that are set to inputs performed in a selection segment according to one embodiment of the present invention shown in FIGS. 6 and 8.
FIG. 15 illustrates examples of various configurations of an input unit according to one embodiment of the present invention shown in FIG. 3.
FIG. 16 illustrates examples of various configurations of an input unit according to one embodiment of the present invention shown in FIG. 5.
FIGS. 17 and 18 illustrate examples of various configurations of an input unit according to one embodiment of the present invention shown in FIG. 6.
FIGS. 19 and 20 illustrate examples of various application of a data input device according to one embodiment of the present invention.

### BEST MODE

As the best mode of carrying out the invention, the invention provides a data input device 1 that comprises at least one input unit 100 and a sensing unit 200 that has at least one sensing means that detects selections for a predetermined position of the input unit and generates an input signal, and provided to perform an input of data assigned to input values set in the input signal,
characterized in that the input unit comprises at least one selection segment 140 that runs inputs in response to selection by a finger;
the selection segment is provided to a size having a predetermined width and length within a range in contact with the fingerprint region 680 on the distal end of one thumb 610;
two indication positions are comprised in the selection segment, wherein the indication positions consist of one indication position in the one side and the other indication position in the other side of the selection segment that are positioned as to be spaced from each other in a predetermined distance on one axis of one direction within the selection segment;
when a reference position located between the one side and the other side in the selection segment is selected by a single selecting action using one finger, one indication position in the one side and the other indication position in the other side corresponding to selection positions in the one side and the other side are selected together in response to the selecting action, two different input signals generated in the selection position of the sensing unit that has sensed the selection are set to be run as one basic input;
when any one of the one side and the other side in the selection segment is selected by a single selecting action using one finger, one indication position in the one side corresponding to selection position in the one side or the other indication position in the other side corresponding to selection position in the one side and the other side is individually selected in response to the selecting action, one input signal generated in the selection position of the sensing unit that has sensed the selection is set to be run as one side input; and
one input value is set in the side input and a new one input value different from the input value of the side input is set in the basic input.

### Mode for Invention

Hereinafter, a data input device 1 according to embodiments of the present invention is described in detail with reference to the accompanying drawings.

First of all, the terms disclosed in the present invention are described.

A selection segment 140 of the present invention is a predetermined selection area in which an input is performed in response to selection by a selection mean in an input unit 100, and signifies a structure of a predetermined shape comprising an element that allow an input of data assigned to the input is made. That is, the selection segment is provided to a size having a predetermined width and length within a range in contact with the fingerprint region on the distal end of one thumb in the input unit that is provided on the base of the data input device. The selection segment comprises a reference position and at least two indication positions to the selection positions performed the selection by a selection means in the selection segment. The two indication positions are positioned as to be spaced from each other in a predetermined distance on one axis of one direction of the selection segment. The axis is a virtual line formed in a predetermined direction.

A basic input (IO) of the present invention signifies the input that is performed by selecting a reference position (PO) in the selection segment 140 of the input unit 100. That is, the basic input is performed in the following processes: when the reference position is selected, one indication position of the one side (refer to PL) and the other indication position of the other side (refer to PR) which are corresponding to the selection position of the one side and the other side of the reference position (which are the one side and the other side of the selection segment) on one axis of one direction of the selection segment are selected together in response to the selecting action; two input signals which are different from each other and generated in the selection positions of the sensing unit 200 detected the selection are processed as one basic input (IO) by a control unit 400, and so that an input of the data assigned to the basic input is performed. The reference position is located between the one side and the other side of the selection segment, and may be a selection position that is the basis for the selection.

A side input (IS) of the present invention signifies the input that is performed by selecting one indication position 130 among two indication positions located in the side (that are the one side and the other side) of the reference position within the selection segment. That is, the side input is performed in the following processes: when the one side of the reference position (which is the one side of the selection segment) or the other side of the reference position (which is the other side of the selection segment) on one axis of one direction of the selection segment is selected, one indication position of the one side (refer to PL) corresponding to the selection position of the one side or the other indication position of the other side (refer to PR) corresponding to the selection position of the other side is individually selected in response to the selecting action; one input signal which is generated in the selection positions of the sensing unit 200 detected the selection is processed as one side input (IS) by a control unit 400, and so that an input of the data assigned to the side input is performed.

An input of the present invention is performed by a selection or a selecting action, wherein the selection (or choose) or the selecting action includes pressing or applying force using a finger. In addition, the selection (or choose) or the selecting action may further includes one or more of leaning, rolling, and sliding a finger. According to the present invention, although it is preferable that a selection means for performing the selection is one thumb 610 among a finger that is one of the selection means, the finger is not limited to the thumb.

The terms used in the present invention, "positioned" or "position" denote "exist in a designated position" or "allow to be existed in a designated position", and may denote "formed" according to configurations of the present invention.

In an input of data, according to the present invention, objects of the input include characters, numbers, symbols, special characters, special symbols, pictures, images, icons, emoticons, figures, and so on. Here, the characters imply letters used in countries across the world. Also, objects of indication include mode, enter, space, F (function), back, shift, ctrl, alt, tab, caps lock, capture, pointing, scroll, call, zoom, direction, changing directions, speed, change, return, and so on. Here, the object "call" includes programs, applications, application software, a display portion 520 showing the Internet, documents, menu windows, or pop-up windows and so on. In addition, objects of search include documents, files, menus, contents, and so on. Furthermore, objects of play include videos, voice, sound, images, broadcasting, films, games, characters, and so on. Besides, objects of motions include rotation, jumping, ascending, descending, moving forward, moving backwards, leaning, return, motion control, and so on. That is, data of the present invention include the above-described input, indication, search, play, motion, and so on. In addition, the data may include signals generated through one or more events of the above-described input, indication, search, play, motion, and so on. However, data assigned to the input unit according to the present invention are not limited to the above-mentioned data.

Electronic devices according to the present invention signify all the electric and electronic products manufactured using technologies of electronic engineering or applying the technologies to real life, and the electronic devices include computers, voice instruments, video instruments, communication apparatuses, information communication apparatuses, game devices, wired devices, wireless devices, wearable devices, variable devices, Internet of things devices, complex equipment, and so on. In addition, the electronic devices may include various types of terminals, peripherals, devices, interfaces, and so on.

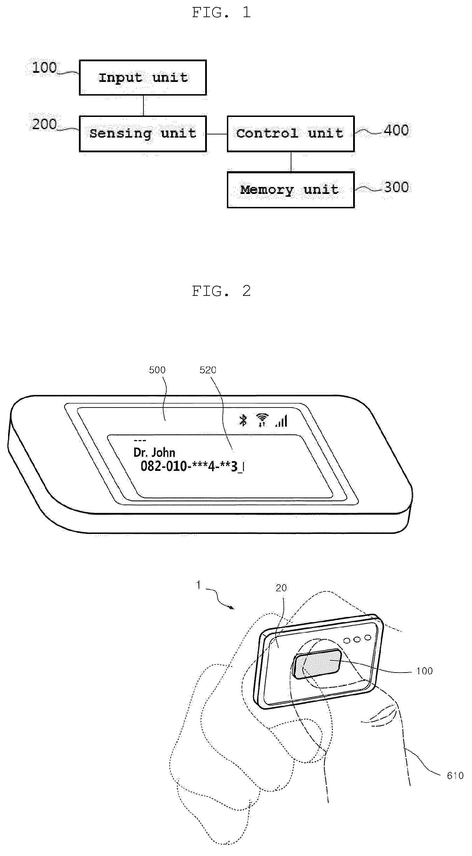

FIG. 1 illustrates a schematic configuration of a data input device 1 according to one embodiment of the present invention.

As shown in FIG. 1, the data input device includes at least one input unit 100, at least one sensing unit 200 which includes at least one sensing means detecting the selection in response to selection for a predetermined position of the input unit and generating an input signal, a memory unit 300 which stores data, and a control unit 400 which receives an input signal detected in the sensing unit and determines, and then extracts data assigned to an input value set to the determined input signal from the memory unit so that the extracted data is inputted.

The sensing means in the sensing unit may include one or more sensors. For example, the sensing means may include a contact sensor. Here, the contact sensor may be a tack switch, a dome switch, a rubber switch, or a contact switch sensor. In addition, the sensing means may include one or more sensors among a pressure sensor, a tactile sensor, and a force sensor sensing pressure applied by selection using a finger.

FIG. 2 illustrates an example of inputs performed using a data input device 1 according to one embodiment of the present invention, wherein the inputs are performed by a selecting action of one thumb 610 in a selection segment 140 of the data input device.

As shown in FIG. 2, the data input device may be configured to be connected to an electronic device with a display unit 500 or a display portion 520 in a wired or wireless manner.

That is, the present invention has a structure in which, even in a state in which one finger is placed in the center of the selection segment and the selection position is out of the range of a user's sight, the selection position is naturally recognized through the finger placed on the selection segment.

Accordingly, the selection segment allows an input to be naturally performed in response to the selection performed through fine intuitive movements of the finger, and the selection segment allows fatigue of the finger to be greatly reduced in the input or reduce an occurrence of the fatigue.

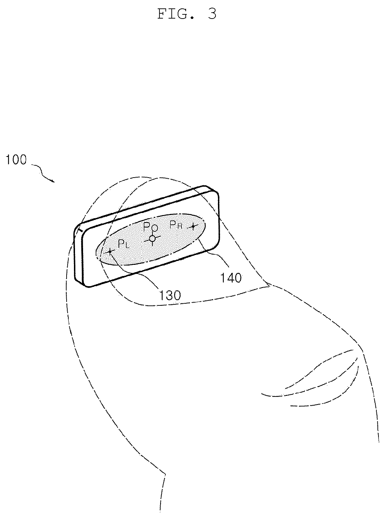

FIG. 3 illustrates a schematic configuration of an input unit 100 according to one embodiment of the present invention.

As shown in FIG. 3, the input unit 100 of the data input device includes at least one selection segment 140 that allows an input to be performed in response to selection performed by a finger.

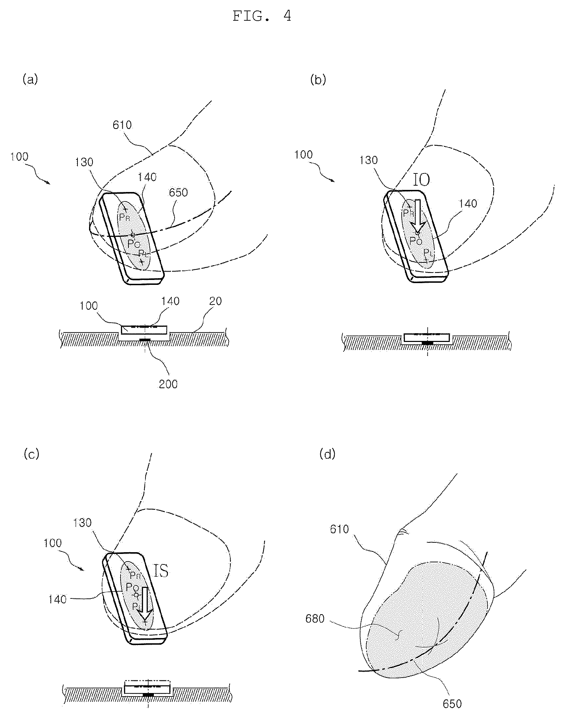

Referring to FIGS. 3 and 4d, the selection segment may be provided to a size having a predetermined width and length within a range in contact with the fingerprint region 680 on the distal end of one thumb 610. In the selection segment, the range in contact with the fingerprint region corresponds to the one defined by the horizontal width and the vertical length of the distal end of the one thumb 610.

In addition, the selection segment includes two indication positions within the selection segment.

Referring to FIG. 3, the two indication positions consist of one indication position in the one side and the other indication position in the other side of the selection segment which are positioned as to be spaced from each other in a predetermined distance on one axis of one direction within the selection segment.

For example, as shown in FIG. 3, in the selection segment, the two different input signals may consist of one left indication position (PL) in the left and one right indication position (PR) in the right of the selection segment which are positioned on one axis in the horizontal direction within the selection segment in such a manner as to be spaced from each other in a predetermined distance. Specifically, referring to FIG. 3, the left and right indication positions are positioned within an area corresponding to the fingerprint of the distal end of one thumb 610 that is placed on the center of the selection segment.

That is, by the configuration of the above-mentioned selection segment, the selecting for one or more among the one side and the other side of the selection segment within selection range by one finger is performed in the selection segment by intuitive selection using one finger.

FIG. 4 illustrates examples of inputs performed in a selection segment 140 according to one embodiment of the present invention shown in FIG. 3.

As shown in FIG. 4, the selection segment 140 may be provided to a size having a predetermined width and length within a range in contact with the fingerprint region 680 on the distal end of one thumb 610.

The selection segment includes one left indication position (PL) positioned in the left of the selection segment and one right indication position (PR) positioned in the right of the selection segment, which are positioned on one axis in one horizontal direction in such a manner as to be spaced from each other in a predetermined distance, wherein the left and right indication positions are positioned within an area corresponding to the fingerprint of the distal end of the one thumb 610 that is placed on the center of the selection segment.

That is, as shown in FIG. 4a, when the distal end of the one thumb 610 is placed on the center of the selection segment, a centerline of fingerprint 650 (refer to FIGS. 4a and 4d) vertically passing the center of the fingerprint region 680 of the distal end of the thumb is placed on a reference position (PO). Here, as shown in FIG. 4c, when the left of the selection segment is selected using the thumb, the left portion of the fingerprint region is positioned to correspond to the one left indication position (PL) positioned in the left of the reference position, while, referring to FIG. 4c, when the right of the selection segment is selected using the thumb, the right portion of the fingerprint region is positioned to correspond to the one right indication position (PR) positioned in the right of the reference position.

The selection segment is characterized in that one indication position (PL) in the one side and the other indication position (PR) in the other side of the selection segment, which correspond to selection positions allowing an input to be performed in the selection segment, are naturally recognized through one finger placed on the selection segment, and a user selects the selection positions through familiar and intuitive actions of his or her one finger without learning an additional selecting method.

On the basis of a single selecting action using one finger for the selection position performing the selection in the selection segment 140, when the user respectively selects two indication positions (PL and PR) corresponding to the selection positions in the one side and the other side of the selection segment and another indication position between the two indication positions (PL and PR) one time using his or her one finger, three data different from each other are respectively inputted.

In addition, as shown in FIG. 4, the selection segment is provided to a size having a predetermined width and length within a range of corresponding to the selection by one finger within selection range using one thumb 610, and thus a various data are easily and quickly inputted in response to the selection of the selection positions (PL, PO, and PR) within the selection range.

The input that allow the three data different from each other to be inputted in the selection segment 140 includes a basic input (IO).

For example, as shown in FIG. 4b, when the reference position (PO) between the one side and the other side of the selection segment is selected by a single selecting action using one finger, one indication position (PL) in the one side and the other indication position (PR) in the other side corresponding to the selection positions in the one side and the other side are selected together in response to the selecting action. Here, the sensing means of the sensing unit 200 senses the selection in response to the selection of the indication positions (PL and PR) and generates two input signals different from each other. The two input signals different from each other are set in advance to be processed as one input (basic input IO). That is, the predetermined control unit 400 extracts data or a signal assigned to the input value of the basic input from the predetermined memory unit 300, and then allows the extracted data or signal to be inputted.

In addition, The input that allow the three data different from each other to be inputted in the selection segment 140 includes a side input (IS).

For example, as shown in FIG. 4c, when one of the one side and the other side of the selection segment is selected by a single selecting action using one finger, one indication position (PL) in the one side corresponding to the selection position in the one side or one indication position (PR) in the other side corresponding to the selection position in the other side is individually selected in response to the selecting action. Here, the sensing means of the sensing unit 200 senses the selection in response to the selection of the indication position (PL or PR) and generates one input signal. The one input signal is set in advance to be processed as one input (side input IS). That is, the predetermined control unit 400 extracts data or a signal assigned to the input value of the side input from the predetermined memory unit 300, and then allows the extracted data or signal to be inputted.

The side input (IS) has one input value set in advance and the basic input (IO) has a new one input value different from the input value of the side input.

The sensing unit 200 may be provided to a base 20 in a position corresponding to the indication positions (PL and PR). The sensing means of the sensing unit may include the one or more above-described sensors.

In the above-mentioned inputs, a respective pressure applied to a basic input (IO) and a side input (IS) may be different from each other.

For example, on the basis of a selection using one finger performing in the selection segment 140, among the inputs performed in the selection segment 140 through one finger, a pressure applied to the reference position (PO) when the selection that allows the two input signals to be generated in the basic input (refer to the arrow in FIG. 4b) is greater than that applied to one indication position (PL) in the one side or the other indication position (PR) in the other side when the selection that allows one input signal to be generated in the side input (refer to the arrow in FIG. 4c).

The control unit 400 may determine an input signals and process an inputs in various manners.

For example, one indication position (PL) in the one side and the other indication position (PR) in the other side of the selection segment 140 are selected by a selection using one finger in the selection segment, and then two input signals different from each other are generated in the sensing unit 200 that has sensed the selections, and after that, the control unit 400 receives the two input signals from the sensing unit 200.

In this case, the control unit calculates a differential between a time when the input signal sensed in the selection of the PL is generated and another time when the input signal sensed in the selection of the PR is generated, and then determines and processes the two input signals as the basic input if the calculated differential between the times is within a predetermined time range, while determines and processes the two input signals as the side input by the selection of the PL or the PR if the calculated differential between the times exceeds the predetermined time range.

For another example, the control unit 400 may receive a number of input signals corresponding to the basic input (IO) or the side input (IS) from the sensing unit 200.

In this case, the control unit 400 calculates a differential between a time when the input signals corresponding to the basic input or the side input are individually generated and another time when the input signals corresponding to the basic input or the side input are successively generated, based on a number of the input signals, and then determines and processes a number of the successive input signals as a number of the basic inputs or side inputs performed in a multistage manner if the calculated differential between the times is within a predetermined time range, while determines and processes a number of the successive input signals as a number of the basic inputs or side inputs performed in an individual manner if the calculated differential between the times exceeds the predetermined time range.

The input unit 100 of the present invention may be provided to a plurality of input units on a predetermined base 20. The input units are arranged in such a manner as to be spaced from each other in at least one direction in a predetermined distance on the base, and may be configured in various forms.

For example, the input unit 100 of the present invention may consist of two input units 101 and 102.

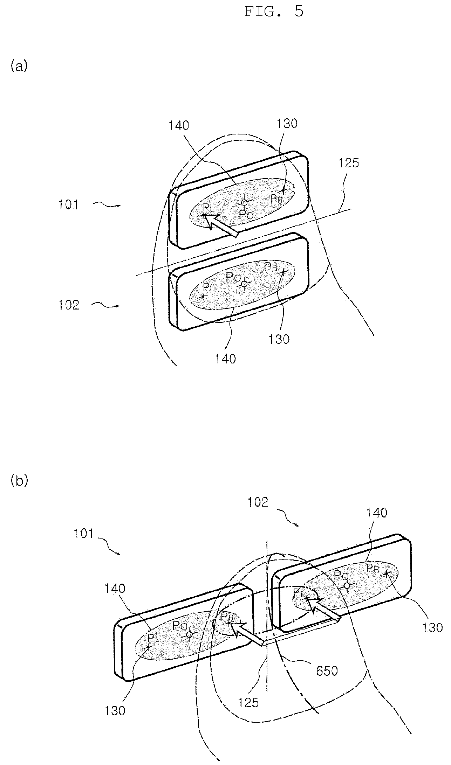

That is, as shown in FIG. 5a, the input unit 100 may consists of a first input unit 101 and a second input unit 102 which are arranged in such a manner as to be spaced from each other in a vertical direction in a predetermined distance on a predetermined base 20.

An inputs performed in the first and second input units may be identically applied to the input corresponding in the above-described embodiment shown in FIG. 3.

In addition, a predetermined input may be additionally performed in the first input unit 101 or the second input unit 102. That is, as shown in FIG. 5a, the first and second input units 101 and 102 are vertically arranged on the base 20 in such a manner as to be spaced from each other in a predetermined distance. In this case, on the basis of one reference line 125 horizontally passing a predetermined position between the first input unit and the second input unit, one indication position (PL) in the one side of a selection segment 140 of the first input unit positioned to the front of the reference line and another indication position (PL) in the one side of a selection segment 140 of the second input unit positioned to the rear of the reference line, or one indication position (PR) in the other side of a selection segment 140 of the first input unit positioned to the front of the reference line and another indication position (PR) in the other side of a selection segment 140 of the second input unit positioned to the rear of the reference line are selected together by a single selecting action using one finger, and thus a predetermined input may be performed. A new one input value different from each input value set in the one indication position (PL) in the one side or another indication position (PR) in the other side may be set in advance in the input.

Besides, the input unit 100 may be configured differently from the above-mentioned configuration in FIG. 5a. That is, the input unit may be configured in such a manner that the first input unit 101 is positioned to the rear of the reference line 125 and the second input unit 102 is positioned to the front of the reference line 125. In this case, the above-mentioned configuration shown in FIG. 5a may be identically applied to the predetermined input and the set of the input value.

As shown in FIG. 5b, the two input units 101 and 102 may be horizontally arranged on the base 20 in such a manner to be spaced from each other in a predetermined distance. In this case, on the basis of one reference line 125 vertically passing a predetermined position between the first input unit and the second input unit, one indication position (PR) in the other side of a selection segment 140 of the first input unit positioned to the left of the reference line and another indication position (PL) in the one side of a selection segment 140 of the second input unit positioned to the right of the reference line are selected together by a single selecting action using one finger, and thus a predetermined input may be performed. A new one input value different from each input value set in the one indication position (PR) in the other side or another indication position (PL) in the one side may be set in advance in the input.

In addition, the input unit 100 may be configured differently from the above-mentioned configuration in FIG. 5b. That is, the input unit may be configured in such a manner that the first input unit 101 is positioned to the right of the reference line 125 and the second input unit 102 is positioned to the left of the reference line 125. In this case, the above-mentioned configuration shown in FIG. 5b may be identically applied to the predetermined input and the set of the input value.

For another example, the input unit 100 may consist of four input units 101, 102, 103, and 104. A first input unit 101 and a second input unit 102 among the four input units may be configured in the same manner as above-described in FIG. 5a. In this case, a third input unit 103 and a fourth input unit 104 among the four input units may be configured in the same manner as the first and second input units 101 and 102. That is, the third input unit 103 and the fourth input unit 104 may be arranged in such a manner as to be spaced from the first and second input units 101 and 102 in a predetermined distance, based on the first and second input units configured in the same manner as above-described in FIG. 5a.

For a further example, the input unit 100 may consist of six input units 101, 102, 103, 104, 105, and 106. A first input unit 101 and a second input unit 102 among the six input units may be configured in the same manner as above-described in FIG. 5a. In this case, a third input unit 103, a fourth input unit 104, a fifth input unit 105, and a sixth input unit 106 among the six input units may be configured in the same manner as the two input units 101 and 102. That is, on the basis of the two input units 101 and 102 configured in the same manner as above-mentioned in FIG. 5a, the third input unit 103 and the fourth input unit 104 may be arranged to the left of the two input units 101 and 102 in such a manner as to be spaced from the two input units in a predetermined distance, and the fifth input unit 105 and the sixth input unit 106 may be arranged to the right of the two input units 101 and 102 in such a manner as to be spaced from the two input units in a predetermined distance.

The plurality of the input units are located in such a manner as to be spaced from each other in a predetermined distance.

In addition, an inputs performed in the plurality of the input units may be identically applied to a corresponding input performed in the above-described input unit. However, a configurations of input units according to the present invention are not limited to those of the first to sixth input units.

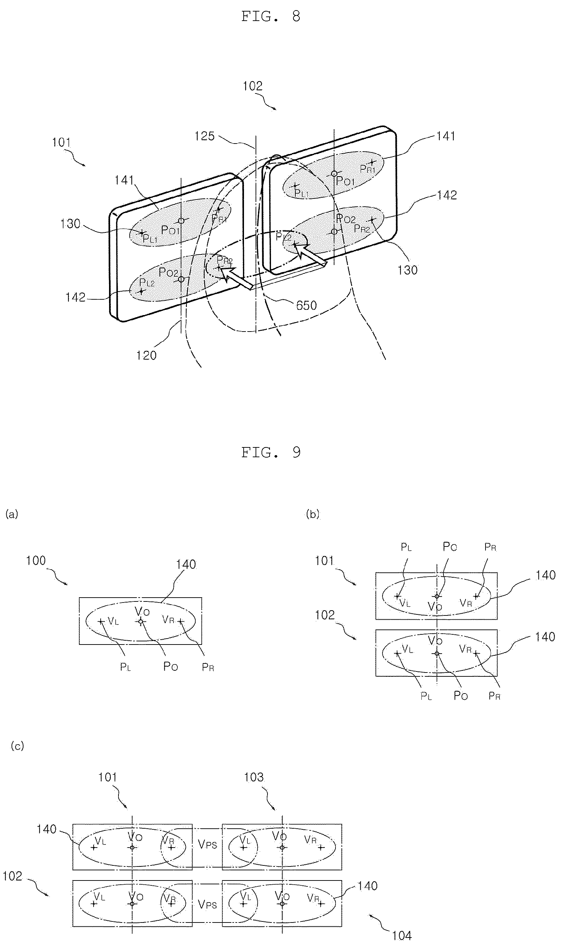

FIG. 9 illustrates examples of input values of various inputs performed in a selection segment 140 according to one embodiment of the present invention shown in FIGS. 3 and 5.

Predetermined input values (V) is set to inputs performed in the input unit 100 of the present invention.

In the selection performed in the selection segment 140 of the input unit, the input values signify a value of corresponding input which is set to a signal generated in one indication position (PL) in the one side or another indication position (PR) in the other side of the selection segment, which corresponds to the selection position of the sensing unit 200 sensed the selection.

FIG. 9a illustrates an example of input values (V) that are set to a basic input (IO) and a side input (IS) of the present invention shown in FIG. 3.

As shown in FIG. 9a, one input value (VL or VR) is set to the side input (IS). That is, in a selection segment 140 of the input unit, the one input value (VL) is set in advance to the side input by selecting one indication position (PL) positioned to the one side of the selection segment, and the another input value (VR) is set to the side input by selecting another indication position (PR) positioned to the other side of the selection segment.

In addition, as shown in FIG. 9a, a new one input value different from the input value (VL or VR) of the side input (IS) is set in the basic input (IO).

FIGS. 9b and 9c illustrate an example of input values (V) that are set to a basic input (IO) and a side input (IS) performed in a plurality of the input units according to the present invention. Setting of the input values may be identically applied to those of the embodiment shown in FIG. 9a.

Referring to FIG. 9c, predetermined input values different from the above-mentioned input values may be additionally set to predetermined inputs performed in the plurality of the input units.

For example, as shown in FIG. 9c, one indication position (PR) in the other side of the selection segment 140 of the first input unit 101 and another indication position (PL) in the one side of the selection segment 140 of the third input unit 103 are selected together by a single selecting action using one finger, and then a predetermined input may be performed. In this case, the new one input value "VPS" different from the input value "VR" set to the "PR" or the input value "VL" set to the "PL" may be set in advance in the input.

Setting of the input value "VPS" may be identically applied to that of the above-described embodiment shown in FIG. 5. That is, as shown in FIG. 5a, one indication position (PL) in the one side of the selection segment 140 of the first input unit 101 and another indication position (PL) in the one side of the selection segment 140 of the second input unit 102 are selected together by a single selecting action using one finger, and then a predetermined input may be performed. In this case, a new one input value different from the input value "VL" set to the "PL" of the first input unit or the input value "VL" set to the "PL" of the second input unit may be set in advance in the input.

In a selection segment 140 according to the present invention, the above-described a basic input (IO) or a side input (IS) may be performed in a multistage manner by two or more times successive selection for one among the reference position (PO) positioned between one side and the other side of the selection segment, the one indication position (PL) in the one side, and the other indication position (PR) in the other side. The successive selection include a repeated selection by a predetermined time difference.

In addition, the basic input or the side input may be performed in a multistage manner with two or more stages by successive step-by-step selection due to an intensity difference of pressure applied to the PO, PL, or PR in the selection segment. The intensity difference of pressure is an intensity difference of pressing force of a finger for the PO in the basic input, or the PL or PR in the side input.

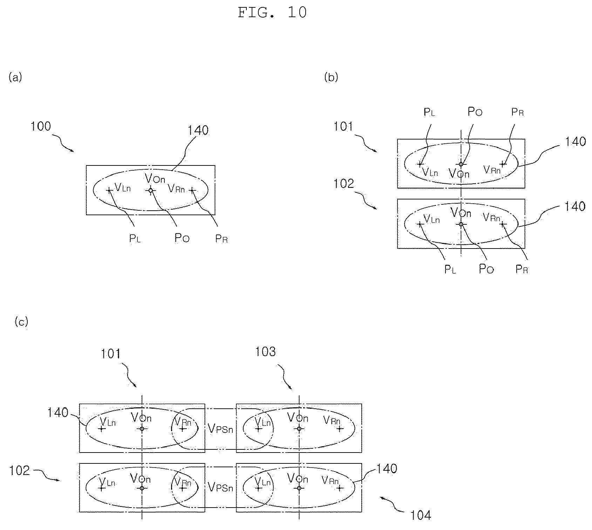

Referring to FIGS. 9 and 10, the new input value (VOn) different from the input value (VO) set in the basic input before performing the multistage may be set in the basic input performed in the multistage. In addition, the new input value (VLn and VRN) different from the input value (VL and VR) set in the side input before performing the multistage may be set in the side input performed in the multistage.

FIG. 10 illustrates examples of input values of various inputs performed in a multistage manner in a selection segment 140 according to one embodiment of the present invention shown in FIGS. 3 and 5.

As shown in FIG. 10a, the new input value (VOn, VLn or VRn) different from the input value (VO, VL or VR) set to a single-stage selection in a basic input (IO) or a side input (IS) may be set in a corresponding input performed in a multistage manner with two or more stages by successive step-by-step selection due to an intensity difference of pressure applied to the selection position (PO, PL or PR) in the selection segment.

FIGS. 10b and 10c illustrate examples of input values (Vn) set to a basic input (IO) and a side input (IS) performed in a multistage manner in a plurality of the input units according to the present invention. Setting of the input values may be identically applied to those of the embodiment shown in FIG. 10a.

In addition, referring to FIG. 10, the input value "VPS" shown in FIG. 9 described above may be set as another input value "VPSn" in a corresponding input performed in the multistage manner.

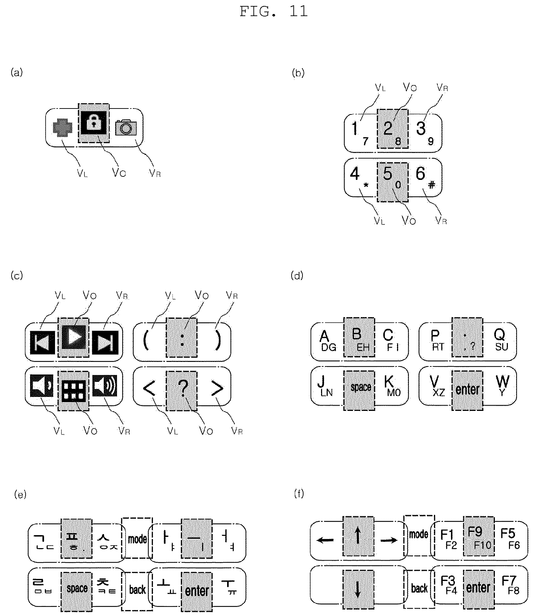

FIG. 11 illustrates examples of various configurations of data assigned to input values that are set to inputs performed in a selection segment according to one embodiment of the present invention shown in FIGS. 3 and 5.

FIG. 11a illustrates examples of data assigned to the input values (V) of inputs performed in a selection segment 140 of one input unit 100 shown in FIG. 3.

For example, objects of data shown in FIG. 11a are emoticons. Referring to FIG. 9, data assigned to the input value "VO" of a basic input (IO) shown in FIG. 11a is a "lock" emoticon. In addition, data assigned to the input value "VL" or "VR" of a side input (IS) shown in FIG. 11a is a "cross" emoticon, or a "camera" emoticon.

FIG. 11b illustrates examples of data assigned to the input values (V) of inputs performed in each of the selection segments 140 of the two input units 101 and 102 shown in FIG. 5a.

For example, objects of data shown in FIG. 11b are numbers. Referring to FIGS. 9 and 10, data assigned to the input values "VO" set to a basic inputs (IO) performed in the first input unit 101 and the second input unit 102 shown in FIG. 11b are "2" and "5", respectively. In addition, data assigned to the input value "VL" set to a side input (IS) performed by selection of the PL in the first input unit shown in FIG. 11b is "1", and data assigned to the input value "VR" set to a side input (IS) performed by selection of the PR in the second input unit is "6". Here, the new input value (VO2) different from the input value (VO) set to a single-stage selection in the basic input is set in a corresponding input performed in a multistage manner with two stages by successive selection or with two stages by successive step-by-step selection due to an intensity difference of pressure in the basic input of the first and second input units. That is, data assigned to the input value "VO2" in the first input unit is "8" rather than "2", and data assigned to the input value "VO2" in the second input unit is "0" rather than "5".

FIG. 11c illustrates examples of data assigned to the input values (V) of inputs performed in each of the selection segments 140 of the four input units 101, 102, 103, and 104. The four input units consist of the two input units 101 and 102 shown in FIG. 5a and other two input units 103 and 104 positioned to the right of the two input units 101 and 102 in a predetermined distance in such a manner as to be spaced from each other.

For example, objects of data shown in FIG. 11c are icons. Referring to FIG. 9, data assigned to the input value "VO" of a basic input (IO) performed in the first input unit 101 shown in FIG. 11c is a "play" icon ( ). The play icon is used to play of hardware or software in an Electronic devices. In addition, data assigned to the input value "VL" or "VR" of a side input (IS) performed in the first input unit 101 is a "accelerating play to forward" icon (►) or a "accelerating play to reverse" icon (◄).

The data assigned to the input values set to the above-mentioned inputs are processed in the control unit 400. For example, in the above-mentioned FIG. 11a, when a basic input (IO) is performed, a function (locking or unlocking) of the "lock" emoticon corresponding to data assigned to the input value "VO" of the basic input is performed. In addition, in the FIG. 11a, when a side input (IS) is performed by selection of the PL, a function (emergency call) of the "cross" emoticon corresponding to data assigned to the input value "VL" of the side input is performed. Furthermore, in the FIG. 11a, when a side input (IS) is performed by selection of the PR, a function (shooting) of the "camera" emoticon corresponding to data assigned to the input value "VR" of the side input is performed.

For another example, in the above-mentioned FIG. 11c, when a basic input (IO) is performed in the first input unit 101, a function (play start) of the "play" icon corresponding to data assigned to the input value "VO" of the basic input is performed. In addition, when a side input (IS) is performed in the first input unit by selection of the PL, a function (play accelerating to reverse) of the "accelerating play to reverse" icon corresponding to data assigned to the input value "VL" of the side input is performed. Furthermore, when a side input (IS) is performed in the first input unit by selection of the PR, a function (play accelerating to forward) of the "accelerating play to forward" icon corresponding to data assigned to the input value "VR" of the side input is performed.

FIG. 11d illustrates examples of other data assigned to the input values (V) set to inputs performed in the four input units 101, 102, 103, and 104 shown in the FIG. 11c.

For example, inputting of data is described with reference to FIG. 11d. Objects of the data shown in FIG. 11d are the English alphabet that is one of characters, and a subject of the inputting is "A,B" in the English alphabet, wherein the inputting is performed by selection of a finger in the below.

First of all, one side (PL) of the first input unit 101 is selected, and then the reference position (PO) in the third input unit 103 is selected two times in succession, and after that, the reference position (PO) in the first input unit is selected. In this case, referring to FIGS. 9c and 10c, data assigned to the input value "VL" set to a side input (IS) by selection of the PL in the first input unit is "A", data assigned to the input value "VO2" set to two stages inputs by two times successive selections to the PO in a basic input (IO) due to selection of the PO in the third input unit is "," (comma), and data assigned to the input value "VO" set to a basic input (IO) by selection of the PO in the first input unit is "B". That is, when the inputs are sequentially performed, the "A,B" are inputted.

FIG. 11e illustrates examples of further data assigned to the input values (V) set to inputs performed in the four input units 101, 102, 103, and 104 shown in the FIG. 11c.

For example, objects of the data shown in FIG. 11e are the Korean alphabet (Hangul). Inputting of the Korean alphabet may be identically applied to a corresponding input of inputs in the above-described embodiment, and thus the description of the inputting is omitted.

FIG. 11f illustrates examples of further data assigned to the input values (V) set to inputs performed in the four input units 101, 102, 103, and 104 shown in the FIG. 11c.

For example, objects of the data shown in FIG. 11f are direction indications. The objects of direction indications are used for indicating directions on hardware or software in an Electronic devices, and a subject of inputting of the direction indications is a game character, wherein the inputting is performed by selection of a finger in the below.

First of all, the reference position (PO) of the first input unit 101 is selected, and the reference position (PO) of the fourth input unit 104 is selected. And then, the reference position (PO) of the fourth input unit 104 is selected again. In this case, referring to FIG. 9, data assigned to the input value "VO" set to a basic input (IO) by selection of the PO in the first input unit is "↑" (move forward), and data assigned to the input value "VO" set to a basic input (IO) by selection of the PO in the fourth input unit is "enter" (change). That is, the game character moves forward by means of a basic input (IO) performed in the first input unit, the game character moves forward in an accelerating manner by means of a basic input (IO) performed in the fourth input unit, and the game character decelerates by means of a basic input (IO) performed in the fourth input unit.

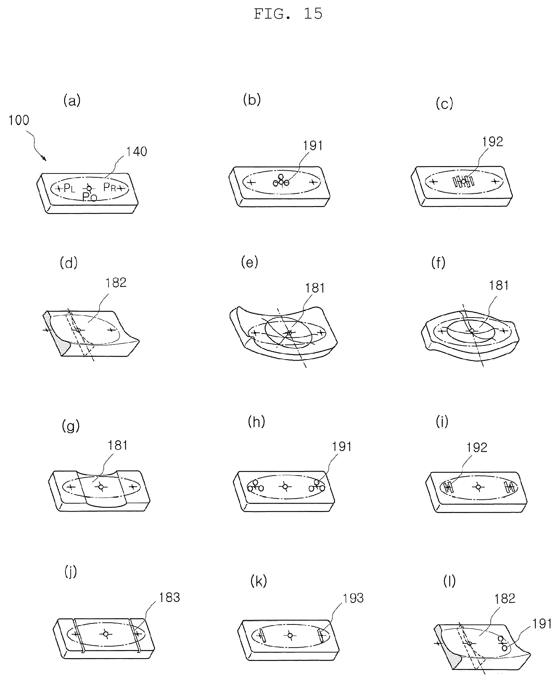

FIG. 15 illustrates examples of various configurations of an input unit 100 according to one embodiment of the present invention shown in FIG. 3.

As shown in FIG. 15, the input unit or the selection segment 140 in the input unit may be configured in various structure including a single form of predetermined size.

That is, the input unit may be provided in the form including one or more among quadrangle, oval and circular. In addition, as shown in FIGS. 15d to 15g and FIG. 15l, the input unit may be provided in an ergonomic shape having a three-dimensional trajectory around the reference position (PO). Furthermore, the input unit may be provided in a concave or convex shape around the reference position (PO), as shown in FIG. 15g. Here, the reference position may be formed in a concave shape ( 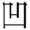 ) including a concave portion 181, and a predetermined potion including one indication position (PL) positioned in the one side and the other indication position (PR) positioned in the other side of the selection segment may be formed in a convex shape ( 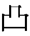 ). In addition, the input unit may be provided in a predetermined elastic body that includes an elastic member. In this case, the elastic member may further include a plurality of elastic members that allow inputs to be performed by classified as each stage according to a differential between elastic coefficients.

The selection segment 140 of the input unit may be provided in a flat shape, as shown in FIG. 15a. In addition, the selection segment may be completely or partially provided in a concave shape around the reference position (PO). Furthermore, the selection segment may be provided in a shape including an asymmetrically-concave portion 182, as shown in FIGS. 15d and 15l.

The selection segment 140 of the input unit may have at least one projection 191, one protruding portion 193, or one line 192 formed thereon. That is, as shown in FIG. 15b, the selection segment may have one or more projections 191 formed around the reference position (PO). In addition, as shown in FIGS. 15h and 15l, the selection segment may have one or more projections 191 formed around the PL or PR. Furthermore, as shown in FIG. 15k, the selection segment may have a protruding portions 193 formed around the PL or PR. Besides, as shown in FIG. 15c, the selection segment may have one or more lines 192 formed around the reference position (PO). In addition, as shown in FIG. 15i, the selection segment may have one or more lines 192 formed around the PL or PR. The line may be formed in one or more among a concave shape, a convex shape or a predetermined pattern 190. Furthermore, as shown in FIGS. 15e and 15f, the selection segment may have a concave portion 181 formed around the reference position (PO). Besides, as shown in FIG. 15j, the selection segment may have one or more grooves 183 formed in a predetermined portion based on the PL or PR. The input unit may further include a shape of a polygon. However, the form of the input unit is not to limit to a structure of the input unit 100 according to the present invention.

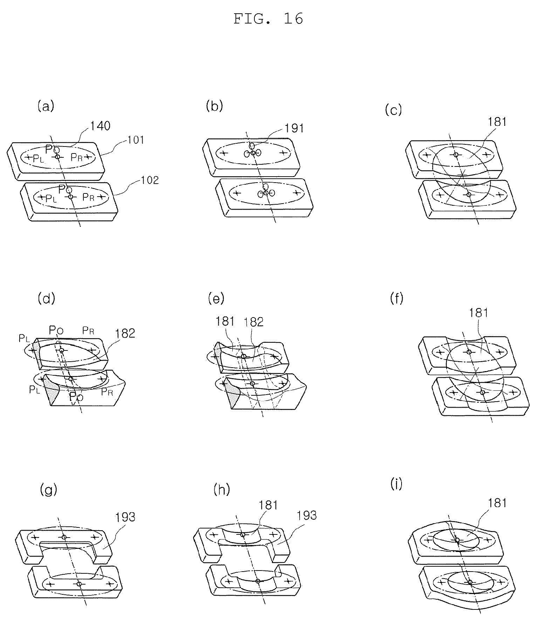

FIG. 16 illustrates examples of various configurations of an input unit 100 according to one embodiment of the present invention shown in FIG. 5.

As shown in FIG. 16, the input unit consists of the first input unit 101 and the second input unit 102, wherein the first input unit or the second input unit may be provided in a shape including one or more among quadrangle, oval, and circle. In addition, as shown in FIGS. 16g and 16h, the first input unit or the second input unit may be provided in a polygonal shape. Furthermore, as shown in FIGS. 16c to 16f as well as FIGS. 16h and 16i, the first input unit and the second input unit may be provided in an ergonomic shape having a three-dimensional trajectory around the center of the first and second inputs. Besides, as shown in FIG. 16h or FIG. 16i, the first input unit or the second input unit may be provided in an ergonomic shape having a three-dimensional trajectory around the reference position (PO) in the input unit. In addition, as shown in FIGS. 16f and 16h, the first input unit or the second input unit may be provided in a concave or convex shape around the reference position (PO) in the input unit. Here, the reference position may be formed in a concave shape ( 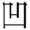 ) including a concave portion 181, and a predetermined potion including one indication position (PL) positioned in the one side and the other indication position (PR) positioned in the other side of the selection segment may be formed in a convex shape ( 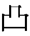 ). In addition, as shown in FIGS. 16g and 16h, the first input unit or the second input unit may includes a protruding portions 193 to a predetermined portions.

As shown in FIG. 16, the selection segments 140 of the first input unit or the second input unit may be provided in a flat shape. In addition, as shown in FIG. 16d, the selection segments 140 of the first input unit or the second input unit may be provided in a shape including an asymmetrically-concave portion 182. Furthermore, as shown in FIG. 16e, the selection segment 140 of any one of the first and second input units may be provided in the shape of a concave portion 181, while the selection segment 140 of the other input unit may be provided in the shape of an asymmetrically-concave portion 182.

The selection segment 140 of the first input unit or the second input unit may have at least one projection 191, one protruding portion 193, or one line 192 formed thereon. That is, as shown in FIG. 16b, the selection segment 140 may have one or more projections 191 formed around the reference position (PO). In addition, as shown in FIGS. 16c, 16f, 16h, and 16i, the selection segment may have a concave portion 181 formed around the reference position (PO).

The input unit may be formed in additional predetermined shapes. However, the above-mentioned form of the input unit is not to limit to a structure of the input unit 100 according to the present invention.

The input unit 100 of the present invention may be configured in a predetermined base 20 in various forms.

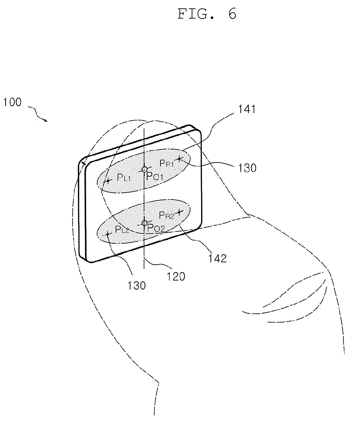

For example, the input unit 100 may be configured as shown in FIG. 6. The FIG. 6 illustrates a schematic configuration of an input unit according to an embodiment different from the embodiment shown in FIG. 3 or 5 in the embodiments of a data input device of the present invention. That is, the FIG. 6 illustrates an example of a configuration in which the above-described selection segment 140 shown in FIG. 3 consists of a first selection segment 141 and a second selection segment 142 that are vertically positioned in the input unit 100 in such a manner as to be spaced from each other in a predetermined distance. In this case, on the basis of one base line 120 vertically passing the reference position (PO) of the first selection segment, the second selection segment may be configured in the rear of the first selection segment in such a manner as to be spaced from the first selection segment to the rear direction of the base line in a predetermined distance as shown in FIG. 6. Alternatively, differently from the embodiment in FIG. 6, the second selection segment may be configured in front of the first selection segment in such a manner as to be spaced from the first selection segment to the front direction of the base line in a predetermined distance.

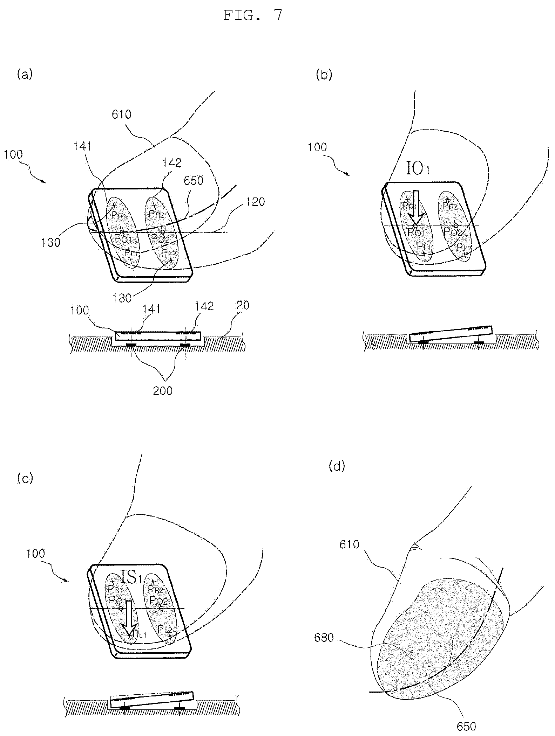

Here, referring to FIGS. 6 and 7, each of the first and second selection segments may be provided to a size having a predetermined width and length within a range in contact with the fingerprint region 680 on the distal end of one thumb 610.

One indication position (PL) in the one side and the other indication position (PR) in the other side of the respective selection segment are positioned as to be spaced from each other in a predetermined distance on one horizontal axis of one direction. The PL and PR of the respective selection segment are positioned within an area corresponding to the fingerprint of the distal end of one thumb 610 that is placed on the center of the respective selection segment. One or more inputs of the above-described a basic input (IO) and a side input (IS) running in the selection segments are performed by one finger placed on the center of the input unit.

FIG. 7 illustrates examples of inputs performed in a selection segment 140 according to one embodiment of the present invention shown in FIG. 6.

Referring to FIGS. 6 and 7, a basic input (IO) or a side input (IS) performed in the first selection segment 141 and the second selection segment 142 of the input unit 100 shown in FIG. 7 may be identically applied to a corresponding input of inputs in the above-described embodiment shown in FIG. 3, and thus the description of the inputting is omitted.

Referring to FIG. 6, the input unit 100 may be configured so that a predetermined input is further performed.

For example, in the selection segments (141 and 142) of the input unit, one indication position (PL1) in the one side of the selection segment 141 and one indication position (PL2) in the one side of the selection segment 142, or one indication position (PR1) in the other side of the selection segment 141 and one indication position (PR2) in the other side of the selection segment 142 and are selected together by a single selecting action using one finger, and thus a predetermined input may be performed. In this case, a new one input value different from each input value set in the one indication position (PL1 or PL2) in the one side or one indication position (PR1 or PR2) in the other side may be set in advance in the input.

FIG. 8 illustrates a schematic configuration of an input unit 100 according to one embodiment which is different from the embodiment shown in FIG. 6 among embodiments of a data input device 1 in the present invention. That is, the input unit 100 shown in FIG. 6 described above may be provided to a plurality of input units on a predetermined base 20. The input units are arranged in such a manner as to be spaced from each other in at least one direction in a predetermined distance on the base, and may be configured in various forms.

For example, the input unit 100 of the present invention may consist of two input units 101 and 102. An input performed in the two input units that are the first input unit 101 and the second input unit 102 may be identically applied to a corresponding input in the above-described embodiment shown in FIG. 3, and thus the description of the inputting is omitted.

In addition, the first input unit 101 or the second input unit 102 may be configured so that a predetermined input is further performed. That is, as shown in FIG. 8, the first input unit and the second input unit may be arranged in such a manner as to be spaced from each other in a horizontal direction in a predetermined distance on a predetermined base 20. In this case, on the basis of one reference line 125 vertically passing a predetermined position between the first input unit and the second input unit, one indication position (PR1) in the other side of the first selection segment 141 of the first input unit positioned to the left of the reference line and another indication position (PL1) in the one side of the first selection segment 141 of the second input unit positioned to the right of the reference line, or one indication position (PR2) in the other side of the second selection segment 142 of the first input unit positioned to the left of the reference line and another indication position (PL2) in the one side of the second selection segment 142 of the second input unit positioned to the right of the reference line are selected together by a single selecting action using one finger, and thus a predetermined input may be performed. A new one input value different from each input value set in the one indication position (PR1 or PR2) in the other side or none indication position (PL1 or PL2) in the one side may be set in advance in the input.

Besides, the input unit 100 may be configured differently from the above-mentioned configuration in FIG. 8. That is, the input unit may be configured in such a manner that the first input unit 101 is positioned to the right of the reference line 125 and the second input unit 102 is positioned to the left of the reference line 125.

Alternatively, on the basis of one reference line 125 horizonrally passing a predetermined position between the first input unit and the second input unit, the input unit may be configured in such a manner that the first input unit 101 is positioned to the front of the reference line and the second input unit 102 is positioned to the rear of the reference line, or the first input unit 101 is positioned to the rear of the reference line and the second input unit 102 is positioned to the front of the reference line.

In this case, the predetermined input and setting of input value may be identically applied to those of the above-mentioned configuration shown in FIG. 8.

As shown in FIG. 6, the first selection segment 101 and the second selection segment 102 in the input unit 100 may be provided to a predetermined size within contact with the fingerprint region on the distal end of one thumb 610. In this case, one indication position (PL) in the one side and the other indication position (PR) in the other side of the respective selection segment are positioned as to be spaced from each other in a predetermined distance on the axis within the respective selection segment, and are positioned within an area corresponding to the fingerprint of the distal end of one thumb that is placed on the center of the first and second selection segments. One or more inputs of the above-described a basic input (IO) and a side input (IS) running in the selection segments are performed by one finger placed on the center of the input unit.

Referring to the embodiment in FIG. 8, three or more input units may be arranged in a predetermined base 20 in a predetermined direction in such a manner as to be spaced from each other in a predetermined distance.

Besides, inputs performed in the three or more input units may be identically applied to a corresponding input performed in the above-described input unit.

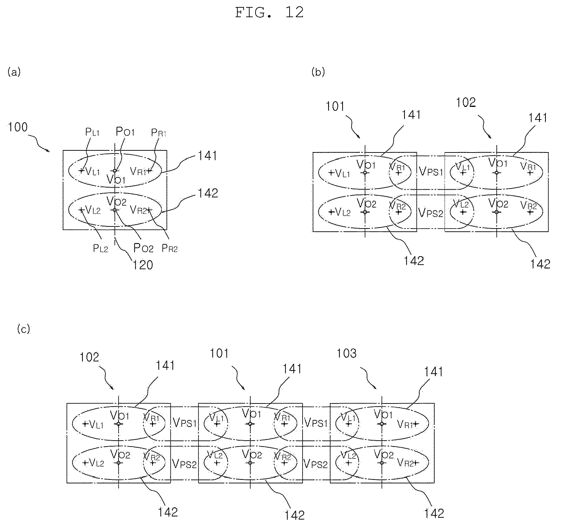

FIG. 12 illustrates examples of input values of various inputs performed in a selection segment 140 according to one embodiment of the present invention shown in FIGS. 6 and 8.

FIG. 12a illustrates an example of input values (V) set to a basic input (IO) and a side input (IS) according to the present invention shown in FIG. 6.

As shown in FIG. 12a, one input value (VL or VR) is set to the side input (IS). That is, in the first selection segment 141 of the input unit, one input value "VL1" may be set to the side input "IS1" by means of selecting one indication position "PL1" positioned in one side of the first selection segment, and another input value "VR1" may be set to the side input "IS1" by means of selecting another indication position "PR1" positioned in the other side of the first selection segment. In addition, in the second selection segment 142 of the input unit, one input value "VL2" may be set to the side input "IS2" by means of selecting one indication position "PL2" positioned in one side of the second selection segment, and another input value "VR2" may be set to the side input "IS2" by means of selecting another indication position "PR2" positioned in the other side of the second selection segment.

As shown in FIG. 12a, the basic input (IO) has a new input value (VO) different from an input value (VL or VR) of the side input. That is, an input value (VO1) different from an input value (VL1 or VR1) of the side input may be set to a basic input (IO1) performed in the first selection segment 141 of the input unit, and another input value (VO2) different from an input value (VL2 or VR2) of the side input may be set to another basic input (102) performed in the second selection segment 142 of the input unit.

FIGS. 12b and 12c illustrate an example of input values (V) set to a basic input (IO) and a side input (IS) performed in a plurality of the input units according to the present invention. Setting of the input values may be identically applied to those of the embodiment shown in FIG. 12a.

Here, referring to FIG. 12b or 12c, predetermined input values different from those described above may be additionally set to predetermined inputs performed in the plurality of the input units.

For example, as shown in FIG. 12b, one indication position (PR1) in the other side of the first selection segment 141 of in the first input unit 101 and another indication position (PL1) in the one side of the first selection segment 141 of the second input unit 102 are selected together by a single selecting action using one finger, and thus a predetermined input may be performed. In this case, the new one input value "VPS1" different from the input value "VR1" set to the "PR1" or the input value "VL1" set to the "PL1" may be set in advance in the input.

Setting of the input value "VPS" may be identically applied to a set value of corresponding input value in the above-described embodiment.

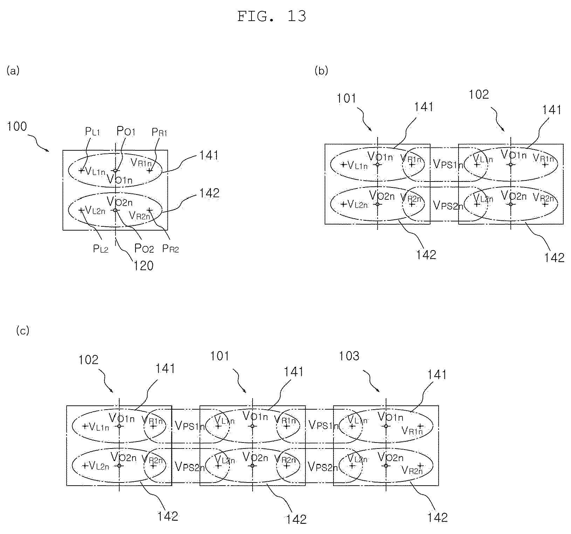

FIG. 13 illustrates examples of input values of various inputs performed in a multistage manner in a selection segment 140 according to one embodiment of the present invention shown in FIGS. 6 and 8.

Referring to the embodiment in FIGS. 9 and 10, as shown in FIGS. 12 and 13, new input values (VO...n) different from input values (VO...) set to the basic inputs before performing the multistage may be set in the basic input performed in the multistage according to the present invention. In addition, new input values (VL...n, VR...n) different from input values (VL..., VR...) set to the side inputs before performing the multistage may be set in the side input performed in the multistage according to the present invention.

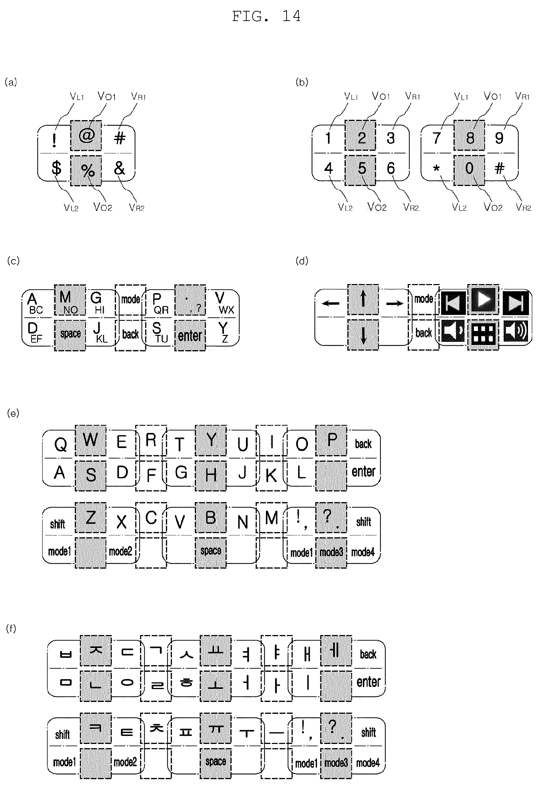

FIG. 14 illustrates examples of various configurations of data assigned to input values that are set to inputs performed in a selection segment 140 according to one embodiment of the present invention shown in FIGS. 6 and 8.

FIG. 14a illustrates an example of data assigned to input values (V) of inputs performed in the two selection segments 141 and 142 of the input unit 100 shown in FIG. 6.

For example, objects of data shown in FIG. 14a are symbols.

Referring to FIG. 12, data assigned to the input value "VO2" of a basic input (102) performed in the second selection segment 142 of the input unit is a symbol "%", as shown in FIG. 14a. That is, when a basic input (102) is performed in the second selection segment of the input unit, the symbol "%" corresponding to data assigned to the input value "VO2" of the basic input is inputted.

FIG. 14b illustrates an example of data assigned to input values (V) of inputs performed in the two input units 101 and 102 shown in FIG. 8.

For example, objects of data shown in FIG. 14b are numbers.

Referring to FIG. 12, data assigned to the input value "VO1" of a basic input (IO1) performed in the first selection segment 141 of the first input unit 101 shown in FIG. 14b is a number "2", and data assigned to the input value "VO2" of a basic input (102) performed in the second selection segment 142 of the second input unit 102 is a number "0". In addition, as shown in FIG. 14b, data assigned to the input value "VL2" of a side input (IS2) performed in the second selection segment 142 of the first input unit 101 by selection of the PL2 is a number "4", and data assigned to the input value "VR1" of a side input (IS1) performed in the first selection segment 141 of the second input unit 102 by selection of the PR1 is a number "9".

FIG. 14c illustrates an example of other data assigned to input values (V) set to inputs performed in the two input units 101 and 102 shown in FIG. 14b.

For example, inputting of data is described with reference to FIG. 14c. Objects of data shown in FIG. 14c are the English alphabet, and a subject of the inputting is "MS" in the English alphabet, wherein the inputting is performed by selection of a finger in the below.

First of all, the reference position (PO1) in the first selection segment 141 of the first input unit 101 is selected, and then one side (PL2) in the second selection segment 142 of the second input unit 102 is selected. Here, referring to FIG. 12b, data assigned to the input value "VO1" set to a basic input (IO1) by selection of the PO1 in the first input unit is "M", and data assigned to the input value "VL2" set to a side input (IS2) by selection of the PL2 in the second input unit is "S". That is, when the inputs are sequentially performed, the "MS" are inputted.

FIG. 14d illustrates an example of other data assigned to input values (V) set to inputs performed in the two input units 101 and 102 shown in FIG. 14c.

For example, inputting of data that controls a game character shown on a predetermined display unit 500 is described with reference to FIG. 14d. Objects of data shown in FIG. 14d are icons, and a subject of the inputting is "direction indication" in the icons, wherein the inputting is performed by selection of a finger in the below.

First of all, the reference position (PO1) in the first selection segment 141 of the first input unit 101 is selected, and then the reference position (PO1) in the first selection segment 141 of the second input unit 102 is selected. Here, referring to FIG. 12b, data assigned to the input value "VO1" set to a basic input (IO1) by selection of the reference position (PO1) in the first selection segment 141 of the first input unit is "↑" (move forward), and data assigned to the input value "VO1" set to a basic input (IO1) by selection of the reference position (PO1) in the first selection segment 141 of the second input unit is a "play" icon (▷ ). Here, when the play icon is used to play hardware or software of electronic devices, the game character "moves forward" by means of the basic input (IO1) performed in the first input unit, and also the game character performs a "predetermined motion" by means of the basic input (IO1) performed in the second input unit.

FIG. 14e illustrates an example of other data assigned to input values (V) set to inputs performed in the six input units 101, 102, 130, 104, 105, and 106 according to the above-mentioned embodiment.

For example, inputting of data is described with reference to FIG. 14e. Objects of data shown in FIG. 14e are the English alphabet, and a subject of the inputting is "PS?" in the English alphabet, wherein the inputting is performed by selection of a finger in the below.

First of all, the reference position (PO1) in the first selection segment 141 of the third input unit 103 is selected, and then the reference position (PO2) in the second selection segment 142 of the second input unit 102 is selected, and after that, the reference position (PO1) in the first selection segment 141 of the sixth input unit 106 is selected. Here, referring to FIG. 12c, data assigned to the input value "VO1" set to a basic input (IO1) by selection of the PO1 of the third input unit is "P", data assigned to the input value "VO2" set to a basic input (102) by selection of the PO2 of the second input unit is "S", and data assigned to the input value "VO1" set to a basic input (IO1) by selection of the PO1 of the sixth input unit is "?". That is, when the inputs are sequentially performed, the "PS?" are inputted.

FIG. 14f illustrates an example of other data assigned to input values (V) set to inputs performed in the six input units 101, 102, 130, 104, 105, and 106 shown in FIG. 14e.

For example, objects of data shown in FIG. 14f are the Korean alphabet (Hangul). Inputting of the Korean alphabet may be identically applied to a corresponding input of inputs in the above-described embodiment, and thus the description of the inputting is omitted.

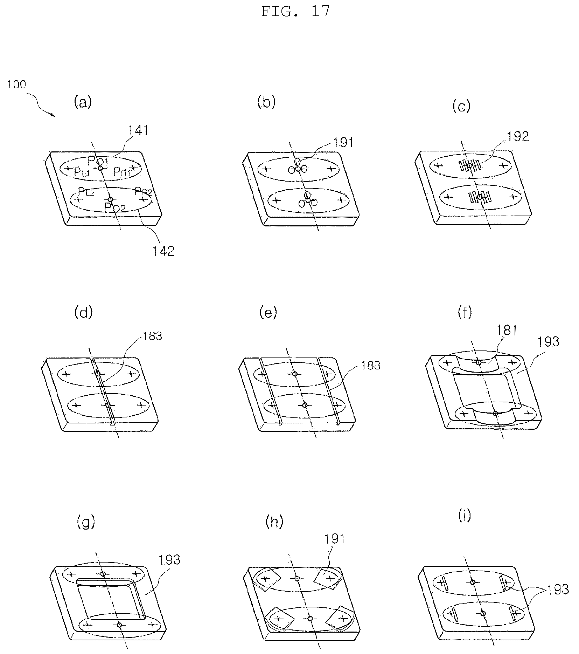

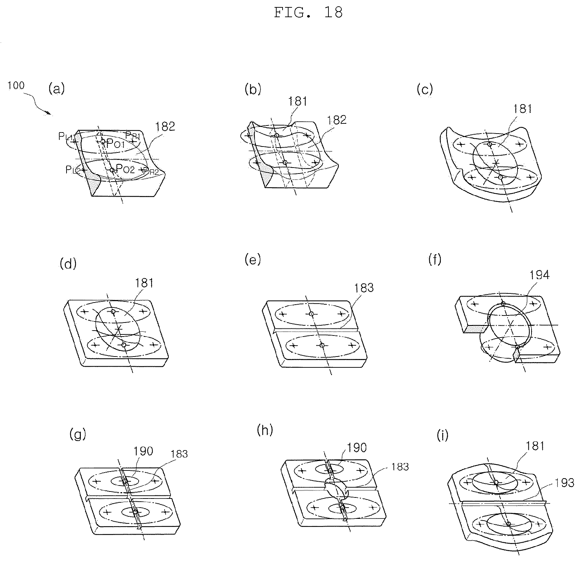

FIGS. 17 and 18 illustrate examples of various configurations of an input unit 100 according to one embodiment of the present invention shown in FIG. 6.

The various configurations of an input unit 100 or a selection segment 140 of the input unit shown in FIG. 17 or FIG. 18 may be identically applied to corresponding configuration in an input unit 100 or a selection segment 140 of the input unit in the above-described embodiment shown in FIG. 15 or FIG. 16, and thus the description of the various configurations is omitted. However, a configuration of a data input device according to the present invention is not limited to those described above.

A sensing unit 200 according to the present invention may be provided to at least one location among a surface of an input unit 100, a location protruding a predetermined height from the surface of the input unit, and a location concaving a predetermined depth from the surface of the input unit. The sensing unit detects the selection in response to selection of a sensing means for one indication position (PL) in the one side or another indication position (PR) in the other side of a selection segment (140) according to the present invention.

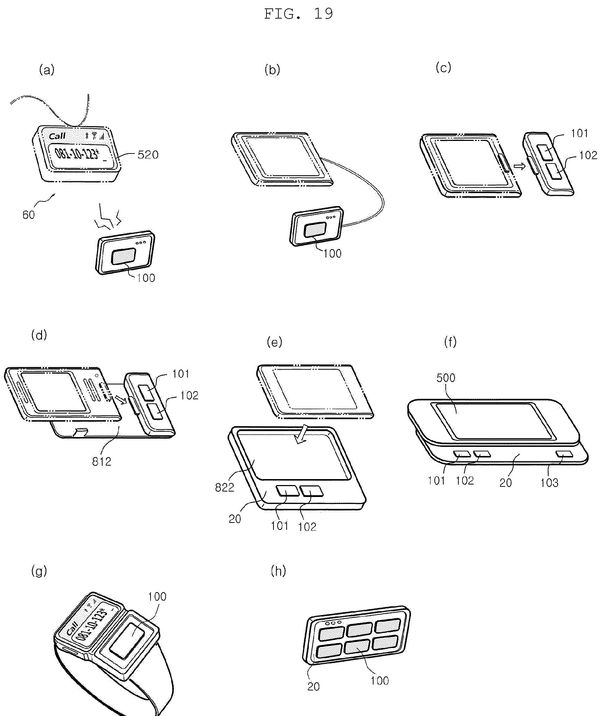

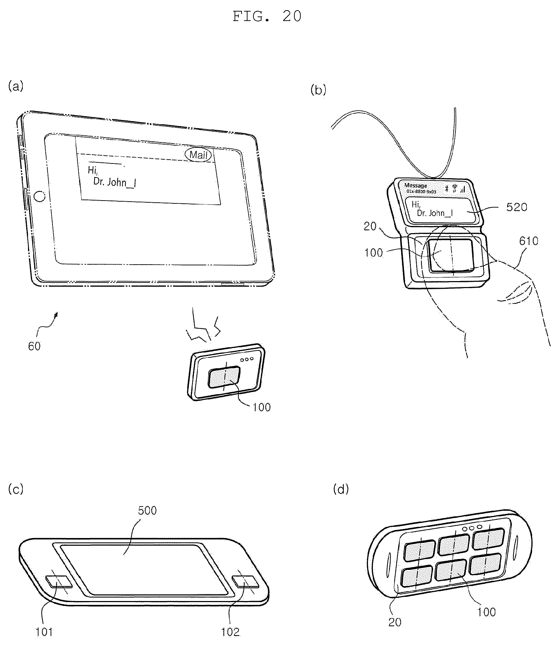

FIGS. 19 and 20 illustrate examples of various application of a data input device 1 according to one embodiment of the present invention.

As shown in FIGS. 19 and 20, the data input device may be provided in various forms.

For example, the input unit 100 of the data input device may be provided in an attachable and detachable manner. In this case, the input unit may be configured in such a manner as to be coupled to a predetermined base 20 or separated from the base.

Besides, as shown in FIG. 19e, the input unit may be provided in the form that integrally installed into a predetermined base 20 and configured in such a manner to be coupled to the base or separated from the base. In this case, an additional means may be provided that allows the input unit to be coupled to or separated from the base. The means includes a holder or a support member made out of an elastic material that have a repetitive feedback characteristics. For example, the holder or support member may be configured that allows the input unit to be coupled to or separated from the base, based on a critical point of the elastic material. That is, the holder or support member allows the input unit to be coupled to the base and maintains the coupled state when pressure of an external force is within the critical point, while the holder or support allows the input unit to be separated from the base when pressure of an external force exceeds the critical point. The critical point may be set on the basis of an usual elastic fatigue of the elastic material.

For another example, an input unit 100 of the data input device may be configured to devices 60 of various forms.

That is, the input unit may be included in one integral device, as shown in FIG. 19b or 20c.

In addition, the input unit may be configured on a slide-type device that slides in a predetermined direction, as shown in FIG. 19f. Furthermore, the input unit may be configured in such a manner to be attachable to and detachable from a predetermined portion of a device, as shown in FIG. 19c. Besides, the input unit may be configured on a support-type device with a supporter 812, as shown in FIG. 19d. In addition, the input unit may be configured on an integral device in which a case 822 is formed on a base 20, as shown in FIG. 19e. Furthermore, the input unit may be configured to a wearable device that a user wears, as shown in FIG. 19g. Besides, the input unit may be configured to an accessory-type device 60, as shown in FIG. 19a or 20b.

For another example, an input unit 100 of the data input device may be configured to a predetermined device 60 in the form of an interface.

That is, the input unit may be configured to a predetermined device 60 in the form of a wired interface connected by means of a wire, as shown in FIG. 19b.

In addition, the input unit may be configured to a predetermined device 60 in the form of a wireless interface connected in a wireless manner, as shown in FIG. 19a or FIG. 20a. In this case, the device may include a transmitting and receiving means. The transmitting and receiving means transmits a transmission signal, which corresponds to an input value set to a signal sensed when the input is performed in the input unit, to a transmitting processor in the device, or receives the transmission signal from a receiving processor in the device in a wired or wireless manner. A wireless manner of the transmitting and receiving means may includes one of RF, Bluetooth, IrDA, Zigbee, SWAP, Wi-Fi, Li-Fi, and so on.

A plurality of the input unit 100 may be provided to the device 60, as shown in FIG. 19h.

The above-described input unit 100 may consist of a plurality of input units in a predetermined device 60, as shown in FIG. 19h.

In addition, the input unit may be configured to a predetermined device 60 in the form of a plurality of interfaces, as shown in FIG. 20d.

On the basis of various configurations of the input unit, the number of input values set to inputs performed in a data input device of the present invention may be further expanded.

One or more inputs according to the present invention may be easily applied in a hardware keyboard or a software keyboard, based on a structure of the input unit 100 according to the present invention or a characteristics of a selection segment 140 configured in the input unit. Therefore, the input unit may be configured in various forms of hardware keyboards of electronic devices in which one or more of inputs and outputs are performed. In addition, the input unit may be configured to perform in such a manner as to be connected to various software keyboards of electronic devices.

Furthermore, the present invention may be easily applied to various types of electronic devices or configured to various types of mini and slim accessories. Therefore, the invention can further improve usability, convenience and portability satisfying various tastes of users.

Characteristics of the present invention allow a user to input individual or successive data easily and quickly. That is, the user uses the data input device 1 of the present invention, so as to obtain an advantage that greatly increases industrial applicability in the input device field.

The above-mentioned embodiments of the present invention are merely some of various embodiments. In addition, the input unit of the present invention includes at least one selection segment that allows inputs to be performed in response to selection performed by means of a finger, and the selection segment is provided to a predetermined size within a range in contact with the fingerprint region on the distal end of one thumb, wherein the selection segment includes one indication position in the one side and another indication position in the other side of the selection segment, which are positioned on one axis of one direction in such a manner as to be spaced from each other in a predetermined distance. It is apparent that a variety of embodiments included within the technical idea of the data input device including the input unit and the selection segment are taken to be included in the scope of the present invention.

### INDUSTRIAL APPLICABILITY

The invention relates to a data input device, the data input device according to the invention provides an input unit that runs an input, wherein the input unit is provided including at least one selection segment having a simple single type structure so as to correspond in a selection range using one finger; a indication position to run an input by the selection is consisted to be positioned each other in one side and the other side of the selection segment which are spaced from each other in a predetermined distance on one axis of one direction within the selection range.

In this invention, characterized in that the selection for one or more among one side and another side of the selection segment is performed by an intuitive selecting action of one finger; and on the basis of a single selecting action using one finger for a selection position performing the selection in the selection segment, three data inputs different from each other are respectively performed by a selection using one finger in such a manner that the selection is performed once each for two indication positions corresponding the selection position in the one side and another side (one indication position of the one side and one indication position of the another side) and middle position of the two indication positions.

That is, in the invention, the selection position in the selection range (one indication position of the one side, the middle position, and one indication position of the another side) are naturally recognized through the finger placed on the selection segment, thereby the selection for the selection position is naturally performed without learning an additional selecting method through familiar and intuitive selecting action by one finger, whereby an input of a various data can be performed easily and quickly. Besides, the invention may be easily applied to an electronic devices of various types or configured as a mini slim accessories of various types.

Accordingly, the invention is a high industrial applicability invention that may be used in the electronic devices performing any one among input, output, and input and output.

## Claims

1. Data input device, comprising:
at least one input unit and a sensing unit that has at least one sensing means that detects selections for a predetermined position of the input unit and generates an input signal, and provided to perform an input of data assigned to input values set in the input signal,
**characterized in that** the input unit comprises at least one selection segment that runs inputs in response to selection by a finger;
the selection segment is provided to a size having a predetermined width and length within a range in contact with the fingerprint region on the distal end of one thumb;
two indication positions are comprised in the selection segment, wherein the indication positions consist of one indication position in the one side and the other indication position in the other side of the selection segment that are positioned as to be spaced from each other in a predetermined distance on one axis of one direction within the selection segment;
when a reference position located between the one side and the other side in the selection segment is selected by a single selecting action using one finger, one indication position in the one side and the other indication position in the other side corresponding to selection positions in the one side and the other side are selected together in response to the selecting action, two different input signals generated in the selection position of the sensing unit that has sensed the selection are set to be run as one basic input;
when any one of the one side and the other side in the selection segment is selected by a single selecting action using one finger, one indication position in the one side corresponding to selection position in the one side or the other indication position in the other side corresponding to selection position in the one side and the other side is individually selected in response to the selecting action, one input signal generated in the selection position of the sensing unit that has sensed the selection is set to be run as one side input; and
one input value is set in the side input, and a new one input value different from the input value of the side input is set in the basic input.

2. Data input device according to claim 1, **characterized in that** in the selection segment, the two different input signals consist of one left indication position in the left and one right indication position in the right of the selection segment which are positioned on one axis in the horizontal direction within the selection segment in such a manner as to be spaced from each other in a predetermined distance, and
the left and right indication positions are positioned within an area corresponding to the fingerprint of the distal end of one thumb that is placed on the center of the selection segment.

3. Data input device according to claim 1, **characterized in that** at least one projection, one protruding portion, or one line is formed around the reference position in the selection segment.

4. Data input device according to claim 1, **characterized in that** a concave portion is formed around the reference position in the selection segment.

5. Data input device according to claim 1, **characterized in that** a plurality of input units is provided on a base, and
the input units are arranged in such a manner as to be spaced from each other in at least one direction in a predetermined distance on the base.

6. Data input device according to claim 2, **characterized in that** the input unit consists of a first input unit and a second input unit which are arranged in such a manner as to be spaced from each other in a vertical direction in a predetermined distance on a base;
on the basis of one reference line horizontally passing a predetermined position between the first input unit and the second input unit, the left indication position of the first input unit positioned to the front of the reference line and the left indication position of the second input unit positioned to the rear of the reference line, or the right indication position of the first input unit positioned to the front of the reference line and the right indication position of the second input unit positioned to the rear of the reference line are selected together by a single selecting action using one finger, and thus a predetermined input is performed; and
a new one input value different from each input value set in the left and right indication positions is set in the input.

7. Data input device according to claim 2, **characterized in that** the input unit consists of a first input unit and a second input unit which are arranged in such a manner as to be spaced from each other in a horizontal direction in a predetermined distance on a base;
on the basis of one reference line vertically passing a predetermined position between the first input unit and the second input unit, the right indication position of the first input unit positioned to the left of the reference line and the left indication position of the second input unit positioned to the right of the reference line are selected together by a single selecting action using one finger, and thus a predetermined input is performed; and
a new one input value different from each input value set in the right and left indication positions is set in the input.

8. Data input device according to claim 1, **characterized in that** the basic input or the side input is performed in a multistage by two or more times successive selection for one among the reference position, the one indication position in the one side, and the other indication position in the other side; and
a new one input value different from an input value set in the basic input or side input before performing the multistage is set in the basic input or side input performed in the multistage.

9. Data input device according to claim 2, **characterized in that** the selection segment consists of a first selection segment and a second selection segment, and
the first and second selection segments are positioned in such a manner as to be spaced from each other in a predetermined distance in a vertical direction of the input unit.

10. Data input device according to claim 9, **characterized in that** each of the first and second selection segments is provided with a size having a predetermined width and length within a range in contact with the fingerprint region on the distal end of one thumb;
the left and right indication positions of the respective selection segment are positioned as to be spaced from each other in a predetermined distance on one horizontal axis of one direction, and are positioned within an area corresponding to the fingerprint of the distal end of one thumb that is placed on the center of the respective selection segment; and
one or more inputs of the basic input and the side input running in the selection segments are performed by one finger placed on the center of the input unit.

11. Data input device according to claim 9, **characterized in that** a plurality of input units is provided on a base, and
the input units are arranged in such a manner as to be spaced from each other in at least one direction in a predetermined distance on the base.

12. Data input device according to claim 9, **characterized in that** the input unit consists of a first input unit and a second input unit which are arranged in such a manner as to be spaced from each other in a horizontal direction in a predetermined distance on a predetermined base;
on the basis of one reference line vertically passing a predetermined position between the first input unit and the second input unit, the right indication position of first selection segment of the first input unit positioned to the left of the reference line and the left indication position of first selection segment of the second input unit positioned to the right of the reference line, or the right indication position of second selection segment of the first input unit positioned to the left of the reference line and the left indication position of second selection segment of the second input unit positioned to the right of the reference line are selected together by a single selecting action using one finger, and thus a predetermined input is performed; and
a new one input value different from each input value set in the right and left indication positions is set in the input.

13. Data input device according to claim 9, **characterized in that** the left indication position of the first selection segment and the left indication position of the second selection segment, or the right indication position of the first selection segment and the right indication position of the second selection segment are selected together by a single selecting action using one finger, and thus a predetermined input is performed; and
a new one input value different from each input value set in the left and right indication positions is set in the input.

14. Data input device according to claim 9, **characterized in that** the first and second selection segments are provided with a predetermined size within contact with the fingerprint region on the distal end of one thumb;
the left indication position and the right indication position of the first and second selection segments are positioned as to be spaced from each other in a predetermined distance on the axis within the respective selection segment, and are positioned within an area corresponding to the fingerprint of the distal end of one thumb that is placed on the center of the first and second selection segments; and
one or more inputs of the basic input and the side input running in the selection segments are performed by one finger placed on the center of the input unit.

15. Data input device, comprising:
an input unit and a sensing unit that has at least one sensing means that detects selections for a predetermined position of the input unit and generates an input signal, and provided with perform an input of data assigned to input values set in the input signal,
**characterized in that** the input unit comprises a selection segment that runs inputs in response to selecting from the outside of the input unit;
the selection segment is provided to a predetermined size within a range of the input unit, and is provided including at least two indication positions that are spaced in a predetermined distance from each other;
when a reference position located between the one side and the other side of the selection segment is selected, two indication positions that are spaced in a predetermined distance to one side and the other side of the reference position on one axis of one direction among the indication positions, two different input signals generated in the selection position of the sensing unit that has sensed the selection are set to be run as one basic input; and
when any one of the one side and the other side of the selection segment is selected, one indication position in the one side or the other indication position in the other side among the two indication positions is individually selected, one input signal generated in the selection position of the sensing unit that has sensed the selection is set to be run as one side input.

16. Data input device, comprising:
at least one input unit and a sensing unit that has at least one sensing means that detects selections for a predetermined position of the input unit and generates an input signal, and provided with perform an input of data assigned to input values set in the input signal,
**characterized in that** the input unit comprises at least one selection segment that runs inputs in response to selection by a finger;
the selection segment is provided to a size having a predetermined width and length within a range in contact with the fingerprint region on the distal end of one thumb;
two indication positions are comprised in the selection segment, wherein the indication positions consist of one indication position in the one side and the other indication position in the other side of the selection segment that are positioned as to be spaced from each other in a predetermined distance on one axis of one direction within the selection segment;
one indication position in the one side and the other indication position in the other side are positioned within an area corresponding to the fingerprint of the distal end of one thumb that is placed on the center of the selection segment;
when a reference position located between the one side and the other side in the selection segment is selected by a single selecting action using one finger, one indication position in the one side and the other indication position in the other side corresponding to selection positions in the one side and the other side are selected together in response to the selecting action, two different input signals generated in the selection position of the sensing unit that has sensed the selection are set to be run as one basic input;
when any one of the one side and the other side in the selection segment is selected by a single selecting action using one finger, one indication position in the one side corresponding to selection position in the one side or the other indication position in the other side corresponding to selection position in the one side and the other side is individually selected in response to the selecting action, one input signal generated in the selection position of the sensing unit that has sensed the selection is set to be run as one side input; and
one input value is set in the side input, and a new one input value different from the input value of the side input is set in the basic input.

17. Data input device according to claim 16, **characterized in that** the sensing unit is provided to at least one location among a surface of the input unit, a location protruding a predetermined height from the surface of the input unit, and a location concaving a predetermined depth from the surface of the input unit.
